# EUROPÄISCHE PATENTSCHRIFT

(11) **EP 1 061 305 B1**
(45) Veröffentlichungstag und Bekanntmachung des Hinweises auf die Patenterteilung: **05.02.2003**
(21) Anmeldenummer: 00107086.1
(22) Anmeldetag: 05.04.2000
(51) Int. Cl.: F16L 59/12, F16B 5/02

(54) **Auskleidungsplattenbefestigung**
Device for fastening lining plates
Dispositif de fixation de plaques de revêtement

(30) Priorität: 16.06.1999 DE 19927491
(43) Veröffentlichungstag der Anmeldung: 20.12.2000
(73) Patentinhaber: Kalenborn Kalprotect - Dr. Mauritz GmbH & Co. KG, 53600 Vettelschoss (DE)
(72) Erfinder: Hecken, Walter, 53578 Windhagen (DE); Leichnitz, Wolfgang, 53545 Linz am Rhein (DE)
(74) Vertreter: Lewald, Dietrich, Dipl.-Ing.

(56) Entgegenhaltungen:
- DE-A- 3 909 340
- DE-U- 9 313 516
- LU-A- 88 629
- US-A- 5 624 256

## Beschreibung

Die Erfindung betrifft eine Auskleidungsplattenbefestigung für hohem Verschleiß ausgesetzte Platten bzw. Formstücke an Unteroder Grundkonstruktionen, insbesondere aus Stahlblech. Solche Auskleidungsplattenbefestigungen an sich sind bekannt.

Als Stahlblechkonstruktionen kommen Rohrleitungen, zylindrischen oder quadratischen Querschnittes, Kanäle aus metallischen Konstruktionen, Behälter, Sichter, heißgehende Zyklone oder dergleichen in Frage, insbesondere Stahlblechkonstruktionen, bei denen die Stahlblechtemperatur aus Energiespargründen bzw. Personenschutzgründen eine zu definierende Temperatur, von z.B. 80°C, nicht überschreiten darf. Andererseits liegen die Temperaturen auskleidungsseitig bis zu 1100 °C, oft um 750°C und trotzdem muß die Isolierung aus Stahlblechkonstruktion, beispielsweise zum Behälter intakt bleiben. Auch befaßt sich die Erfindung mit einem Verfahren zur Befestigung von Auskleidungen an Stahlblechunterkonstruktionen mittels Befestigungselementen, insbesondere Haltebügeln zwischen Unterkonstruktion und Formstückplatten der Auskleidung, insbesondere wenn diese Verschleißschutzteile hoher Temperatur ausgesetzt sind.

Bekannt ist, eine haftende Verlegeschicht zwischen Auskleidung bzw. Formstücken und Stahlblechkonstruktionen vorzusehen, was insbesondere dann, wenn die Anlage mit erhöhten Temperaturen betrieben werden muß ein Versagen zur Folge haben kann. Es tritt nämlich in diesem Fall, insbesondere bei Außenisolierung beispielsweise eines Stahlbehälters eine etwa 3-fach größere Wärmedehnung im Stahlbehälter verglichen mit der Auskleidung mit Formstücken auf, welche zum Versagen der haftenden Verlegeschicht führt.

Das deutsche Gebrauchsmuster DE-9313516 U1 der Anmelderin offenbart eine Auskleidungsplattenbefestigung für hohem Verschleiß ausgesetzte Platten bzw. Formstücke an Unter- oder Grundkonstruktionen aus Stahlblech mit an die Stahlblechkonstruktion befestigten Haltebügetn, in deren Haltebereich die verschleißfesten Formstücke befestigbar sind. Thermische Deformationen können dabei durch die Haltebügel zum Teil abgefedert werden. Die Plattenbefestigung wird auch unter Bedingungen ermöglicht, wo Haftmassen versagen. Es wird Verlegemörtel zwischen den Platten und dem Stahlblech vorgesehen. Diese Lösung löste thermische Deformationsprobleme nur zum Teil. In der Anordnung in Verlegemörtel ist die Federwirkung der Haltebügel begrenzt. Trotz Auskleidung blieb das Stahlblech beträchtlichen Wärmedehnungen ausgesetzt.

Der Erfindung liegt die Aufgabe zugrunde, eine flächenbündige Auskleidung ohne haftende Verlegeschicht zwischen Formstück einer Konstruktion derart vorzuschlagen, daß eine Lösung für den enormen Unterschied in der Wärmespannung zwischen Stahlblechkonstruktion und Auskleidungsformstücken gefunden wird.

Erreicht wird dies durch die Auskleidungsplattenbefestigung nach Anspruch 1 und das Verfahren nach Anspruch 12. Vorzugsweise sind die verschleißfesten Formstücke über Befestigungselemente und Scheibe an die Haltebügel angebracht. Die Haltebügel haben dabei in ihrem Kopfbereich eine Bohrung zur Aufnahme des Befestigungselementes, an die die verschleißfesten Formstücke befestigt werden. Dabei entspricht die Höhe der Haltebügel gleichzeitig der errechneten Isolierstärke. Man kann auch den Werkstoff der Haltebügel so wählen, daß er dem der Stahlblechkonstruktion entspricht und die gleichen thermischen Längenänderungen wie die Stahlblechkonstruktion aufweist. Nach dem Befestigen der Haltebügel und dem Einbringen des Isoliermörtels auf die Stahlblechkonstruktion wird, um einen Schutz unter den offenen Fugen zu gewährleisten, eine verschleißfeste Masse, beispielsweise ein Hartstoff, in eine Dicke von ca. 10 bis 15 mm aufgetragen. Dann wird in die noch nicht abgebundene, verschleißfeste Schicht das Formstück positionsgenau eingesetzt und befestigt. Zwischen Auflagefläche des Sechskantkopfes des Befestigungselementes und des verschleißfesten Formstückes wird, um Spannungen auszugleichen, eine Scheibe eingelegt.

Es lassen sich auch Schlußformstücke einbringen, diese können durch Sägeschnitte angepaßt werden, ein bedeutender Vorteil der erfindungsgemäßen Maßnahmen.

Diese verschleißfesten Formstücke haben auf der Verlegeseite eine Profilierung, auch Ausprägung genannt. Dies gewährleistet eine Verstärkung im Bereich der Verschraubung im verschleißfesten Formstück und zum anderen eine Sicherung gegen Verdrehen des Formstückes im Betrieb. Bei der erfindungsgemäß beschriebenen offenen Stirnfuge von ca. 3 mm wäre ohne diese Ausprägung ein Verdrehen bei rückseitig aufgebrachter runder Rosette ohne weiteres denkbar.

Durch die gesamte Konfiguration kommt es nur zu minimalen Bewegungen infolge thermischer Längenänderung, deshalb sind Kräfte, die ein Reißen der verschleißfesten Formstücke oder der Schweißnähte zur Folge haben könnten, von vorne herein ausgeschlossen.

Die verschiedensten verschleißfesten Werkstoffe lassen sich mittels der Maßnahme nach der Erfindung befestigen, beispielsweise solche auf der Basis von mineralischen Schmelzprodukten, gesinterten Produkten usw.

Auf die Isolierschicht wird also die Hartstoffschicht aufgebracht, die rückseitig bereits befestigten Formstücke der Auskleidungsplatten werden durch die erwähnte Bohrung gesteckt und sind verdrehsicher angeordnet. Ein Blättchen 32 schließt den nach außen weisenden Hohlraum im Schraubbolzenkopf ab.

Ergebnisse haben gezeigt, daß diese neue Art der Verlegung bzw. Befestigung bei offenen Fugen die oben genannten Probleme, also auch Wärmedehnungen, die sich um einen Faktor 3 unterscheiden, beherrschbar macht. Der Haltebügel kann an sich beliebig sein. Er kann gegen die Stahlblechkonstruktion verschweißt sein und über eine Deckplatte die Verbindung zwischen seinen Halteschenkeln herstellen. Eine Graphitdichtung kann im Kopf des Schraubbolzens vorgesehen sein.

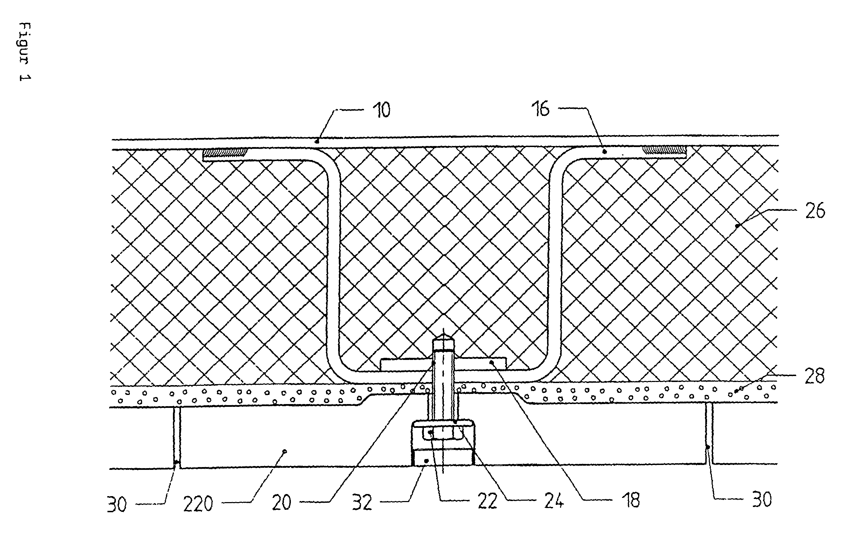

Eine beispielsweise Ausführungsform der Erfindung soll nun mit Bezug auf die beiliegende Zeichnung näher erläutert werden.

An der Stahlblechkonstruktion 10 sind die Schenkel eines Haltebügels 16 befestigt, beispielsweise angeschweißt. Der Haltebügel trägt auf der dem Stahlblech gegenüberliegenden Seite eine Dekkenplatte 18, die mittig eine mit Gewinde versehene Bohrung 20 trägt. Gegen den Haltebügel wird ein im abgestuften Befestigungsloch eines Formstückes 220 durchgestecktes Befestigungselement 22, das gegen eine Graphitdichtung 24 abdichtet, gesteckt. Die Formstücke, von denen jedes eine solche Befestigung trägt, sind bündig nebeneinander angeordnet. Nach Anbringung der Haltebügel 16 an der Stahlblechkonstruktion 10 wird eine Isolierung 26, deren Zusammensetzung dem Fachmann bekannt ist, mit aufgebracht.

Nachdem der Haltebügel 16 befestigt, der Isoliermörtel 26 aufgebracht ist, wird, um einen Schutz unter den offenen Fugen zu gewährleisten, eine verschleißfeste Masse 28 (Hartstoff) in einer Dicke von 10 bis 15 mm auf die Isolierschicht aufgetragen. In diese noch nicht abgebundene verschleißfeste Hartstoffschicht 28 wird jedes Formstück 220 positionsgenau eingesetzt und befestigt. Zwischen Auflagefläche des Sechskantkopfes des Befestigungselementes 22 und des verschleißfesten Formstückes 220 wird, um Spannung auszugleichen, eine Scheibe 12, beispielsweise aus Graphit eingelegt. Dann werden die Formstücke 220 und die Schlußformstücke eingebracht und justiert. Die Stirnfugen 30 bleiben leer. Die Hartstoffschicht ist als Abrasivschicht einerseits gegen das Durchblasen verschmutzter Gase oder dergleichen vorhanden, andererseits schützt sie die Stahlblechkonstruktion gegen eine Wärme von beispielsweise 700 °C.

Die Auskleidungsplattenbefestigung kann mit einer Messstelle für die Bestimmung der Temperatur des Grundkörpers vorgesehen sein. Damit kann beispielsweise eine Taupunktunterschreitung ausgeschlossen oder umgegangen werden.

Es ist überraschend, daß durch eine relativ einfache Maßnahme, eigentlich durch Weglassen der eigentlichen Verlegemasse, ein auf dem Fachgebiet sehr ernstes Problem gelöst werden konnte.

Durch die Geometrie des Stufenloches und die rückseitige Ausprägung steht nicht zu erwarten, daß sich das Formstück verdrehen wird.

## Patentansprüche

1. Auskleidungsplattenbefestigung für hohem Verschleiß ausgesetzte Platten bzw. Formstücke an Unter- oder Grundkonstruktionen aus Stahlblech mit an die Stahlblechkonstruktion (10) befestigten Haltebügeln (16), in deren Haltebereich (20) die verschleißfesten Formstücke (220) befestigbar sind, **gekennzeichnet durch** eine Isolierschicht mit darauf aufgebrachter verschleißfester Hartstoffschicht, in die die Formstücke positionsgenau einsetzbar sind.

2. Auskleidungsplattenbefestigung nach Anspruch 1, **dadurch gekennzeichnet, dass** die verschleißfesten Formstücke (220) über Befestigungselemente (22) und Scheibe (12) an die Haltebügel (16) angebracht sind.

3. Auskleidungsplattenbefestigung nach Anspruch 1 oder 2 mit hohem Verschleiß ausgesetzten Platten bzw. Formstücken, **gekennzeichnet durch** Formstücke mit einer Profilierung auf der Verlegeseite in Form einer Verstärkung zur Sicherung gegen Verdrehen des Formstückes.

4. Auskleidungsplattenbefestigung nach einem der vorhergehenden Ansprüche, **dadurch gekennzeichnet, dass** der Werkstoff der Haltebügel dem Werkstoff der Stahlblech-Unterkonstruktion (10) bzw. der thermischen Belastung der verschleißfesten Formstücke (220) anpassbar ist.

5. Auskleidungsplattenbefestigung nach einem der vorhergehenden Ansprüche, **gekennzeichnet durch** eine rechnerisch bestimmbare Stärke der Isolierung (26).

6. Auskleidungsplattenbefestigung nach einem der vorhergehenden Ansprüche, **dadurch gekennzeichnet, dass** eine Messstelle für die Bestimmung der Temperatur des Grundkörpers zur Umgehung beziehungsweise zum Ausschluss einer Taupunktunterschreitung vorgesehen ist.

7. Auskleidungsplattenbefestigung nach einem der vorhergehenden Ansprüche, **dadurch gekennzeichnet, dass** einzelne Formstücke auswechselbar angeordnet sind.

8. Auskleidungsplattenbefestigung nach einem der vorhergehenden Ansprüche, **dadurch gekennzeichnet, dass** die Formstücke mit offenen Fugen an den Stirnseiten angeordnet sind.

9. Auskleidungsplattenbefestigung nach einem der vorhergehenden Ansprüche, **gekennzeichnet durch** eine das Verdrehen einzelner Formstücke (220) verhindernde Ausbildung von Befestigungselement Kopf, Bohrung im Haltebügel und ggf. Befestigungsmutter.

10. Auskleidungsplattenbefestigung nach einem der vorhergehenden Ansprüche, **gekennzeichnet dadurch, dass** die verschleißfeste Hartstoffschicht (28) eine Stärke von 10-15 mm bei offener Fuge zwischen den Formstücken (220) aufweist.

11. Auskleidungsplattenbefestigung nach einem der vorhergehenden Ansprüche, **dadurch gekennzeichnet, dass** auch einzelne Formstücke im Randbereich auswechselbar ausgebildet sind.

12. Verfahren zur Befestigung von hohem Verschleiß ausgesetzten Platten bzw. Formstücken an Unter- oder Grundkonstruktionen aus Stahlblech, mit an die Stahlblechkonstruktion (10) befestigten Haltebügeln (16) **gekennzeichnet durch**
a) Aufbringen einer Isoliermörtelschicht
b) Auftragen von einer verschleißfesten Hartstoffmasse auf die Isolierschicht
c) Einsetzen in die noch nicht abgebundene verschleißfeste Hartstoffmasse von jedem Formstück
d) Befestigen der Formstücke
wobei die Fugen zwischen den Platten unverfüllt belassen werden.

13. Verfahren nach Anspruch 12, **dadurch gekennzeichnet, dass** auf die Isolierung zwischen Unterkonstruktion und Formstücken eine Hartstoffschicht aufgebracht wird, in die, solange sie noch weich ist, die Formstückplatten einjustierbar sind, wobei die Nachjustierung über die Befestigungselemente erfolgt.

14. Verfahren nach einem der Ansprüche 12 oder 13, **dadurch gekennzeichnet, dass** bei bekannter Betriebstemperatur die Stahlblechtemperatur durch geeignete Wahl der Isolierung bestimmbar gemacht wird.

## Claims

1. Lining panel fastening for panels or mouldings subjected to high levels of wear on substructures or basic structures of sheet steel, having holding brackets (16) which are fastened to the sheet-steel structure (10) and in the holding region (20) of which the wear-resistant mouldings (220) can be fastened, **characterized by** an insulating layer with a layer of wear-resistant material applied to it and into which the mouldings can be placed exactly in position.

2. Lining panel fastening according to Claim 1, **characterized in that** the wear-resistant mouldings (220) are attached to the holding brackets (16) by means of fastening elements (22) and a disc (12).

3. Lining panel fastening according to Claim 1 or 2 with panels or mouldings subjected to high levels of wear, **characterized by** mouldings with a profiling on the laying side in the form of a reinforcement to prevent the moulding being twisted.

4. Lining panel fastening according to one of the preceding claims, **characterized in that** the material of the holding brackets can be adapted to the material of the sheet-steel substructure (10) or the thermal loading of the wear-resistant mouldings (220).

5. Lining panel fastening according to one of the preceding claims, **characterized by** an arithmetically predeterminable thickness of the insulation (26).

6. Lining panel fastening according to one of the preceding claims, **characterized in that** a measuring location is provided for the determination of the temperature of the basic body to avoid or to preclude falling below a dew point.

7. Lining panel fastening according to one of the preceding claims, **characterized in that** individual mouldings are arranged such that they are exchangeable.

8. Lining panel fastening according to one of the preceding claims, **characterized in that** the mouldings are arranged with open joints at the end faces.

9. Lining panel fastening according to one of the preceding claims, **characterized by** a formation of the fastening element head, hole in the holding bracket and, if appropriate, fastening nut that prevents the twisting of individual mouldings (220).

10. Lining panel fastening according to one of the preceding claims, **characterized in that** the layer of wear-resistant material (28) has a thickness of 10-15 mm with an open joint between the mouldings (220).

11. Lining panel fastening according to one of the preceding claims, **characterized in that** individual mouldings are also designed in the edge region such that they are exchangeable.

12. Method of fastening panels or mouldings subjected to high levels of wear on substructures or basic structures of sheet steel, having holding brackets (16) which are fastened to the sheet-steel structure (10), **characterized by**
a) applying a layer of insulating mortar
b) applying a compound of wear-resistant material to the insulating layer
c) placing each moulding into the not yet set compound of wear-resistant material
d) fastening the mouldings
with the joint between the panels being left unfilled.

13. Method according to Claim 12, **characterized in that** a layer of mechanically resistant material into which the moulding panels can be adjusted as long as it is still soft is applied to the insulation between the substructure and the mouldings, the readjustment taking place by means of the fastening elements.

14. Method according to one of Claims 12 or 13, **characterized in that**, with a known operating temperature, the temperature of the sheet steel is made determinable by a suitable choice of the insulation.

## Revendications

1. Dispositif de fixation de plaques d'habillage pour des pièces de forme soumises à une usure élevée, dans des structures inférieures ou des structures de base en tôle d'acier comportant des étriers de retenue (16) qui sont fixés à la structure en tôle d'acier (10) et dans la zone de retenue (20) desquels les pièces de forme (220) résistantes à l'usure peuvent être fixées, **caractérisé par** une couche isolante sur laquelle est déposée une couche de matériau dur résistant à l'usure, et dans laquelle les pièces de forme peuvent être insérées d'une manière précise en position.

2. Dispositif de fixation de plaques d'habillage selon la revendication 1, **caractérisé en ce que** les pièces de forme (220) résistantes à l'usure sont montées sur les étriers de retenue (16) par l'intermédiaire d'éléments de fixation (22) et de rondelles (12).

3. Dispositif de fixation de plaques d'habillage selon la revendication 1 ou 2 pour des plaques ou des pièces de forme soumises à une usure élevée, **caractérisé par** des pièces de forme possédant, sur la face de pose, un profil sous la forme d'un renforcement pour obtenir une sécurité vis-à-vis d'une torsion de la pièce de forme.

4. Dispositif de fixation de plaques d'habillage selon l'une des revendications précédentes, **caractérisé en ce que** le matériau des étriers de retenue peut être adapté au matériau de la structure inférieure en tôle d'acier (10) ou à la charge thermique des pièces de forme (220) résistant à l'usure.

5. Dispositif de fixation de plaques d'habillage selon l'une des revendications précédentes, **caractérisé par** une épaisseur de l'isolant (26), qui peut être déterminée par calcul.

6. Dispositif de fixation de plaques d'habillage selon l'une des revendications précédentes, **caractérisé en ce qu'**un point de mesure est prévu pour la détermination de la température du corps de base pour contourner ou exclure une baisse de la température au-dessous du point de rosée.

7. Dispositif de fixation de plaques d'habillage selon l'une des revendications précédentes, **caractérisé en ce que** des pièces de forme individuelles sont disposées de manière à être interchangeables.

8. Dispositif de fixation de plaques d'habillage selon l'une des revendications précédentes, **caractérisé en ce que** les pièces de forme sont disposées avec des joints ouverts au niveau des côtés frontaux.

9. Dispositif de fixation de plaques d'habillage selon l'une des revendications précédentes, **caractérisé par** un agencement, qui empêche la torsion de pièces de forme individuelles (220), l'élément de fixation, la tête, le perçage dans l'étrier de retenue et éventuellement de l'écrou de fixation.

10. Dispositif de fixation de plaques d'habillage selon l'une des revendications précédentes, **caractérisé en ce que** la couche de matériau dur (28) résistante à l'usure possède une épaisseur de 10-15 mm dans le cas d'un joint ouvert entre les pièces de forme (220).

11. Dispositif de fixation de plaques d'habillage selon l'une des revendications précédentes, **caractérisé en ce que** des pièces de forme individuelles sont également réalisées de manière à être interchangeables, dans la zone du bord.

12. Procédé pour fixer des plaques ou des pièces de forme soumises à une usure élevée sur des structures inférieures ou des structures de base en tôle d'acier, comportant des étriers de retenue (16) fixés à la structure en tôle d'acier (10), **caractérisé par**
a) l'application d'une couche de mortier isolant,
b) le dépôt d'une masse de matériau dur résistante à l'usure sur la couche isolante,
c) l'introduction de la masse de matériau isolant résistant à l'usure, non encore fixé, de chaque pièce de forme,
d) fixation des pièces de forme,
les joints entre les plaques subsistant à l'état non rempli.

13. Procédé selon la revendication 12, **caractérisé en ce que** sur l'isolant entre la structure inférieure et les pièces de forme on applique une couche de matériau dur, dans laquelle, tant qu'elle est encore molle, des plaques des pièces de forme peuvent être insérées de façon ajustée, l'ajustement complémentaire s'effectuant par l'intermédiaire des éléments de fixation.

14. Procédé selon l'une des revendications 12 ou 13, **caractérisé en ce que** pour une température de fonctionnement connue, la température de la tôle d'acier peut être déterminée au moyen d'un choix approprié de l'isolant.
